(19)

**Europäisches Patentamt**

**European Patent Office**

**Office européen des brevets**

(11) **EP 4 603 395 A1**

(12) **EUROPEAN PATENT APPLICATION**

(43) Date of publication:
**20.08.2025 Bulletin 2025/34**

(21) Application number: **25157470.3**

(22) Date of filing: **12.02.2025**

(51) International Patent Classification (IPC):
**B64F 5/60** (2017.01)    **G01M 5/00** (2006.01)
**G05B 23/02** (2006.01)    **G06F 17/18** (2006.01)
**G06Q 10/04** (2023.01)    **G06Q 10/20** (2023.01)

(52) Cooperative Patent Classification (CPC):
**G01M 5/0066; B64F 5/60; G05B 23/024;**
**G06F 17/18; G06Q 10/04; G06Q 10/20**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **13.02.2024 US 202418440482**

(71) Applicant: **The Boeing Company**
**Arlington, VA 22202 (US)**

(72) Inventor: **Faust, Jacob Edward**
**Arlington, 22202 (US)**

(74) Representative: **Witte, Weller & Partner**
**Patentanwälte mbB**
**Postfach 10 54 62**
**70047 Stuttgart (DE)**

(54) **FLEET MANAGEMENT SYSTEM**

(57)    A method implemented by a computing device, of monitoring a collection of machines. The method includes receiving a plurality of candidate statistical distributions for the collection of machines. Each of the plurality of candidate statistical distributions describes a first operations data and a second operations data characterizing one or more aspects of at least one machine of the collection of machines. The method further includes updating and comparing the plurality of candidate statistical distributions based on a combination of the first operations data and the second operations data. The method further includes selecting from the plurality of candidate statistical distributions a baseline statistical distribution based on the comparing. Additionally, the method includes outputting the baseline statistical distribution, wherein the baseline statistical distribution is predicted to best describe both the first operations data and the second operations data and sending an alert to indicate the baseline statistical distribution that was discovered.

600

RECEIVING A PLURALITY OF CANDIDATE STATISTICAL DISTRIBUTIONS
FOR THE COLLECTION OF MACHINES
610

UPDATING THE PLURALITY OF CANDIDATE STATISTICAL DISTRIBUTIONS
BASED ON A COMBINATION OF THE FIRST OPERATIONS DATA AND THE
SECOND OPERATIONS DATA
620

COMPARING THE PLURALITY OF CANDIDATE STATISTICAL
DISTRIBUTIONS BASED ON A COMBINATION OF THE FIRST AND
SECOND OPERATIONS DATA
630

SELECTING FROM THE PLURALITY OF CANDIDATE STATISTICAL
DISTRIBUTIONS A BASELINE STATISTICAL DISTRIBUTION BASED ON THE
COMPARING
640

OUTPUTTING THE BASELINE STATISTICAL DISTRIBUTION, WHEREIN THE
BASELINE STATISTICAL DISTRIBUTION IS PREDICTED TO BEST DESCRIBE
BOTH THE FIRST OPERATIONS DATA AND THE SECOND OPERATIONS
DATA
650

SENDING AN ALERT TO INDICATE THE DISCOVERED
BASELINE STATISTICAL DISTRIBUTION
660

**FIG. 6**

**Description**

**TECHNOLOGICAL FIELD**

The present disclosure relates generally to evaluating machine operations and, more specifically, to evaluating data from the operation of a collection of machines to better manage the collection.

**BACKGROUND**

Vehicle fleets are monitored for a wide variety of statistics that are observed or computed known as Key Performance Indicators (KPIs). KPIs are data metrics used to track various aspects of a fleet of equipment, such as, but not limited to, the safety and performance of the vehicles. Examples of KPIs include fleet vehicle utilization, vehicle longevity, vehicle reliability, maintenance completion times, fix-effectiveness, customer satisfaction, and customer retention rates. Large amounts of data are used to analyze the fleet and forecast the indicators. The data can be obtained in a variety of different manners, including, but not limited to, real-time monitoring of the individual vehicles, historic data points from previously recorded flights, and simulated testing. The analysis includes identifying or expressing the indicator in functions or as discussed herein as statistical distributions. Statistical distributions are mathematical expressions that describe the probability that a random variable will take on a specific value or set of values.

There is a need for analyzing large amounts of data to assess and forecast a vast number of indicators. The analysis should provide for obtaining meaningful results without necessitating high computational power requirements.

Unless explicitly identified as such, no statement herein is admitted as prior art merely by its inclusion in the Technological Field and/or Background section.

**SUMMARY**

One aspect of the present disclosure is directed to a method implemented by a computing device, of monitoring a collection of machines. The method includes receiving a plurality of candidate statistical distributions for the collection of machines. Each of the plurality of candidate statistical distributions describes a first operations data and a second operations data characterizing one or more aspects of at least one machine of the collection of machines. The method further includes updating the plurality of candidate statistical distributions based on a combination of the first operations data and the second operations data. The method further includes comparing the plurality of candidate statistical distributions based on a combination of the first and second operations data. Additionally, the method includes selecting from the plurality of candidate statistical distributions a baseline statistical distribution based on the comparison. The method includes outputting the baseline statistical distribution, wherein the baseline statistical distribution is predicted to best describe both the first operations data and the second operations data. The method further includes sending an alert to indicate the discovered baseline statistical distribution.

In some aspects in which the method is used to monitor a collection of machines, triggering the alert results in a change in the maintenance of the machines. For example, in response to the alert, one or more steps of a maintenance program are changed. Examples include but are not limited to making a change in the frequency of the maintenance, and replacement of one or more components at a new predetermined time (e.g., six months of use, 100,000 miles of use of a vehicle).

The features, functions, and advantages that have been discussed can be achieved independently in various aspects or may be combined in yet other aspects, further details of which can be seen with reference to the following description and the drawings.

**BRIEF DESCRIPTION OF THE DRAWINGS**

Figure 1 is a schematic diagram of a computing device that receives operations data from a fleet of vehicles and one or more remote nodes according to some aspects of the present disclosure.

Figure 2 is a schematic diagram of a fleet management system according to some aspects of the present disclosure.

Figure 3 is a flowchart illustrating a method of monitoring operations data of a fleet of vehicles according to some aspects of the present disclosure.

Figure 4 is a flowchart illustrating a method of monitoring operations data using distribution hypothesis testing according to some aspects of the present disclosure.

Figure 5 is a flowchart illustrating a method of performing candidate distribution refinement according to some aspects of the present disclosure.

Figure 6 is a flowchart illustrating a method of determining candidate distribution selection according to some aspects of the present disclosure.

Figure 7 is a schematic diagram of a computing device for performing the methods disclosed herein according to some aspects of the present disclosure.

## DETAILED DESCRIPTION

The present application is directed to analyzing operational data of a collection of machines. A variety of different machines are applicable, including but not limited to various vehicles (e.g., such as aircraft, ships, trucks, cars), manufacturing equipment, computing equipment, and office equipment. One example of a collection is a vehicle fleet.

In some examples, the processes are applied to a fleet management system for analyzing operations data related to fleet vehicles to determine trends and behaviors in the data. The fleet management system determines the most up-to-date static statistical baseline distributions best describing the operations data. The updated baseline distributions are used by the fleet management system to monitor and track large amounts of operations data. Updating the baseline distribution improves the monitoring and tracking of the operations data by providing an accurate baseline to compare incoming operational data.

The flight management system performs a comparative analysis between the updated baseline distribution against candidate distributions as operations are performed or rerun. If the current baseline distribution fails to closely match the operations data, an updated baseline distribution replaces the current faulty baseline distribution. An alert may be generated to highlight the detected new data trend or behavior in the operations data. In this way, a new trend or behavior in the operations data is detected when the current baseline distribution is comparatively no longer the best representation of the operations data with statistical certainty.

The fleet management system calls attention to surprising variations in operations data. The fleet management system may also provide context and improved characterizations. The characterizations come in the form of a predefined parametric distribution with optimized parameters. The iteratively-improved distributions cause the fleet management system to further adapt to evolving operations. The fleet management system may also inform the recipient of the alert to re-run analyses dependent on statistical characterizations.

In some examples, the fleet management system treats each indicator in the operations data as a random variable. Baseline characterizations/forecasts are set for the behavior of indicators based on engineering analysis or historical precedent. The indicators observed from the data are compared against the baseline characterization. When it is determined that the baseline characterization is not valid in light of the fleet data, an alert is generated. In some examples, the management system also provides a statistical distribution best describing the fleet data. The new distributions of the data are used to characterize and forecast the indicators.

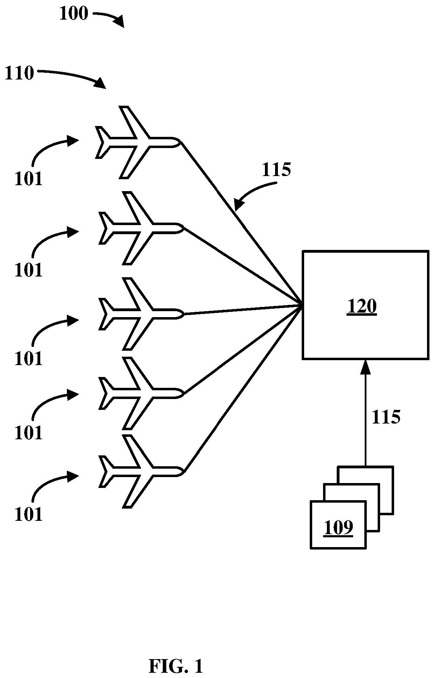

Figure 1 illustrates a fleet 110 of vehicles 101. In this example, vehicles 101 are aircraft configured to transport passengers and/or cargo or execute missions. The number and type of vehicles 101 that include the fleet 110 can vary. Operations data 115 is gathered by a computing device 120 indicative of an operation of the fleet 110. Examples of operations data 115 include, but are not limited to, a number of trips (e.g., flights), distance traveled, a number of passengers, amount of cargo, fuel usage, maintenance records, and weather conditions. The operations data 115 can be collected from a variety of different sources including, but not limited to, sensors that are onboard the vehicles 101, flight crew input, and remote nodes 109 such as third-party data (e.g., Federal Aviation Administration), airport authorities, airline personnel, weather services (e.g., National Weather Service).

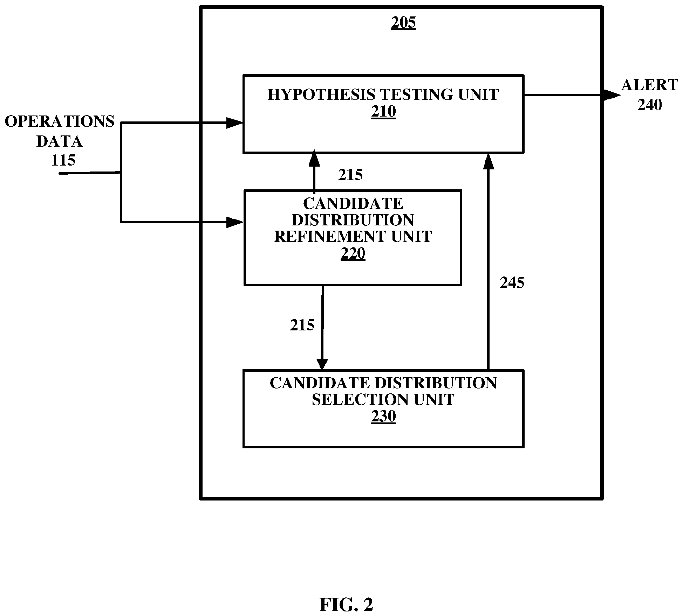

Computing device 120 includes a fleet monitoring system 205 as illustrated in Figure 2. The fleet monitoring system 205 is a computer program having instructions to perform hypothesis testing, candidate distribution refinement, and candidate distribution selection by a hypothesis testing unit 210, candidate distribution refinement unit 220, and candidate distribution selection unit 230, respectively.

Figure 2 further illustrates the relationship between the hypothesis testing unit 210, candidate distribution refinement unit 220, and candidate distribution selection unit 230 included in fleet monitoring system 205. In some examples, each unit is interconnected for analyzing operations data 115 based on Bayesian statistics. The hypothesis unit 210, candidate distribution refinement unit 220, and candidate distribution selection unit 230 may work in concert to determine whether a distribution from an array of competing evolving statistical distributions (*i.e.,* candidate distributions) can outperform a single fixed distribution (*i.e.,* a baseline distribution $M_0$). In some examples, hypothesis unit 210, candidate distribution refinement unit 220, and candidate distribution selection unit 230 rely on the thesis that the distribution that is the best characterization has the highest likelihood of generating a given set of operations data. In some examples, each unit is interconnected for analyzing operations data 115 based on Frequentist statistics.

Hypothesis testing is a process in which fleet monitoring system 205 determines whether a baseline distribution, $M_0$, or a candidate distribution has the highest likelihood of matching the operations data 115. The baseline distribution, $M_0$, is set based on the believed behavior of operation of one or more of the vehicles 101. In some examples, the baseline distribution, $M_0$, is set by an engineer that designs the aircraft or is based on historic precedent. The candidate distributions include an array of one or more distributions different from the current baseline distribution, $M_0$.

The hypothesis testing unit 210 tests the fitness of the baseline distribution or other frequentist hypothesis. In some cases, the testing determines whether the baseline distribution reasonably suits the operations data 115. In some examples, an alert 240 is generated by the hypothesis testing unit 210 when the baseline distribution does not adequately characterize the operations data 115.

Candidate distribution refinement is a process in which the candidate distribution refinement unit 220 optimizes possible distribution options to better represent the operations data 115. In some examples, the candidate distribution options are selected from a predetermined group of distributions a priori and subsequently refined.

Candidate distribution selection selects one of the candidate distributions as the new baseline distribution, $M_0$, as it better represents the operations data 115. In some examples, candidate distribution selection is initiated after the hypothesis unit 210 has determined that the baseline distribution is no longer a reasonable representation of the operations data 115. In other examples, candidate distribution selection may work concurrently with the hypothesis testing. The candidate distribution selection unit 230 sends the new baseline distribution, $M_0$, 245 to the Hypothesis Testing unit 210 for future hypothesis testing.

Figure 2 further illustrates operations data 115 is received by the hypothesis testing unit 210 and candidate distribution refinement unit 220. The candidate distribution refinement unit 220 outputs the options for candidate distributions 215 to the candidate distribution selection unit 230. In some examples as illustrated in Figure 2, the candidate distribution options are also output to the hypothesis testing unit for testing.

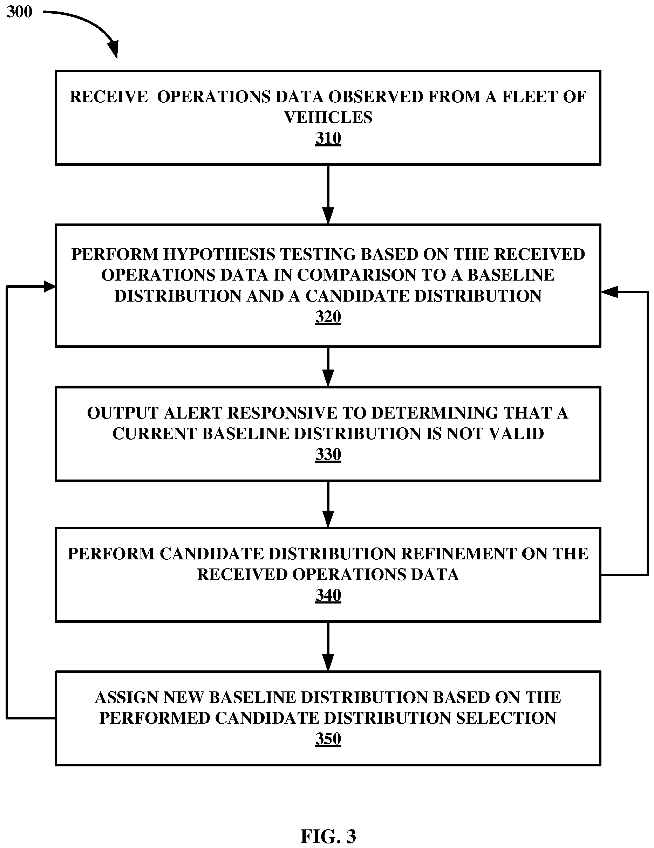

Figure 3 is a flowchart of method 300 of monitoring a fleet 110 of vehicles 101. Operations data 115 is received from one or more of the vehicles 101 and/or remote nodes 109 (block 310). In some examples, operations data 115 is historical data stored at a computing device or operations data captured and measured in real-time from a computing device.

Examples of such operations data 115 may include, but are not limited to:

- Operational Availability - Measured as the fraction of total time the aircraft is ready to operate not based on schedule. It reflects the level of reliability and maintainability achieved in design, the fidelity of the manufacturing processes, maintenance policy, in-theater assets, order/ship times, etc.
- Budget - Cost for fuel, parts, personnel, etc.
- Aircraft Configuration - A measure of overall missions/flights in percentages of hours per vehicle configuration.
- Network Connections - A measure in percent of a network being functional verses being "down" and not functional.
- O&S Costs - Various cost metrics including cost per flight hour, annual aircraft cost, and annual fleet costs.
- Critical vs. Non-Critical Maintenance - Measured as a ratio of critical vs non-critical maintenance actions.
- Equipment Availability - Capacity planning for equipment to include spares, parts, and flight equipment.
- Flight Hours between before flight aborts - Measured as flight hours between before-flight aborts in hours.

In some examples, method 300 further includes performing hypotheses testing by comparing a baseline distribution, $M_0$, to the operations data 115 and further comparing a candidate distribution to the operations data (block 320). In some examples, the comparison is based using a calculated Bayes Factor, and/or the difference in Kullback-Liebler divergence of the baseline distribution relative to a true, but unknown, distribution and the Kullback-Liebler divergence candidate distribution relative to the true, but unknown, distribution. The comparison that yields a better fit to represent the operations data 115 is preferred.

Method 300 further includes outputting an alert responsive to determining that a current baseline distribution is not reasonably valid (block 330). In other words, a candidate distribution is an exceedingly better representation of the operations data than the baseline distribution or the baseline distribution is an implausible representation of the data.

Method 300 further includes performing candidate distribution refinement on the received operations data (block 340). The candidate distribution refinement optimizes one or more candidate distributions that are possible to better represent the operations data 115. The possible candidate distributions are then transmitted to the hypothesis testing unit 210 for hypothesis testing as well as the candidate distribution selection unit. In this way, possible candidate distributions for selection by the candidate distribution selection unit 230 and the hypothesis testing unit 210, for testing are constantly improving over time and reflect recent operations.

In some examples, candidate distribution refinement on the received operations data (block 340) is performed prior to performing hypotheses testing (block 320).

The method determines a new baseline distribution from the one or more candidate distributions (block 350). Once a new baseline distribution is determined, further hypothesis testing is performed on the new baseline distribution.

***Hypothesis Testing***

The hypothesis testing unit 210 determines if the original hypothesis (*i.e.,* the baseline distribution $M_0$) is no longer a reasonable representation of the operations data 115. In some examples, the baseline distribution is a null hypothesis that is rejected using the nomenclature of Null Hypothesis Significance Testing (NHST). In other examples, the testing is not framed as a NHST but rather implemented as Bayesian Hypothesis Tests (BHTs) where the baseline distribution is compared relative to an array of candidate distributions, $M_1, M_2, ..., M_{n+1}$. Each candidate distribution is tested against the baseline distribution to determine if it has a higher likelihood of generating the operations data 115. In some examples, this is done by setting a static threshold on the ratio on these likelihoods, known as the Bayes Factor (see Equation 1). The Bayes Factor is equivalent to the ratio of evidence of one distribution is selected relative to another using Bayesian logic. $M_j$ and $M_0$ are distinct models (i.e., distributions). As an example, $M_j$ is a candidate model, and $M_0$ is a baseline model. The equation compares the generative performance, known as the evidence, of the candidate model with respect to the operations data $D$ with the generative performance of the baseline model with respect to the same operations data $D$. The $P$ is a likelihood function. The resulting ratio or Bayes Factor is a value that will indicate which distribution is more likely to match the operations data 115. The greater Bayes Factor is the more likely that candidate distribution $M_j$ is the better model. The inverse is also true in which a lower Bayes Factor is indicative of the model baseline distribution $M_0$ is more likely a better characterization. This occurs when Bayes Factor < 1.

(Eq. 1)

$$\text{Bayes Factor} := \frac{P(D|M_j)}{P(D|M_0)} = \frac{\frac{P(M_j|D)P(D)}{P(M_j)}}{\frac{P(M_0|D)P(D)}{P(M_0)}} = \frac{P(M_j|D)P(M_0)}{P(M_0|D)P(M_j)}$$

In some examples, a decision policy is set on the difference in sample Kullback-Liebler (KL) divergence relative to a true, but known, distribution of the baseline distribution and candidate distribution. The KL-divergence is a measure of expected logarithmic difference in probability density/mass. Intuitively, the distribution with the least logarithmic deviation relative to the true, but unknown, distribution is the best fit. In contrast, the policy drawn by the ratio of likelihoods has an equivalent decision policy based upon the cumulative logarithmic deviation a dataset provides for each the two distributions.

The KL-divergence based policy has many positives, especially in experiments with high rates of misleading evidence. A policy example on the derivation and analysis is given below.

Let *x* be samples of the operations data 115 for indicator *X,* and $\zeta j := \ln(P(X|M_j)) - \ln(P(X|M_0))$, with $E(\zeta_j) := \mu$ and $E(\zeta_j^2) := \sigma^2$. The difference of $M_0$'s KL-divergence and that of $M_j$'s is equal to $E(\zeta_j)$ as an extension of Sanov's Theorem. Thus if it is determined that $\mu$ as being only positive, then the candidate distribution is explicitly better than the baseline hypothesis. Subsequently, the experiment is finished.

Using the principle of maximum entropy, a Bayesian Inference can be constructed where the variation of $\zeta_j$ is described as normally distributed, $N(\mu, \sigma)$, in the absence of any other additional information. Because the values of $\mu$ or $\sigma$ are unknown, a non-informative prior is set, the reference prior. The Bayesian Inference of $(\mu, \sigma)$ is established following in Equation 2 where *n* the number of samples of *X.*

(Eq. 2)

$$f(\mu, \sigma | \zeta_{j,1}, \zeta_{j,2}, ..., \zeta_{j,n}) = \frac{D_n}{\sigma^{n+1}} \exp\left(-n\frac{(\mu - \bar{\zeta}_j)^2 + C}{2\sigma^2}\right)$$

where

$$\bar{\zeta}_j := \frac{1}{n} \sum_i^n \zeta_{j,i}$$

$$C := \frac{1}{n} \sum_{i=1}^{n} \left( \zeta_{j,i} - \bar{\zeta_j} \right)^2$$

$$D_n := \frac{2}{\Gamma\left(\frac{n-1}{2}\right)} \sqrt{\frac{n^n C^{n-1}}{\pi 2^n}}$$

If the posterior of the inference, which provides the possible values that $\mu$ can take given the operations data 115, indicates that $\mu$ is possibly negative or zero with an exceedingly low probability, $\alpha$, then the experiment is finished and $M_j$ as undoubtedly a 'better' distribution of the operations data 115. Mathematically, this policy is described by Equation 3 where $F_t$ is the Cumulative Distribution Function (CDF) of the Student's t distribution with degrees of freedom (d.o.f.) $n$ - 1.

(Eq. 3)

$$F_{t_{n-1}}\left( 0 \middle| \bar{\zeta_j}, \sqrt{\frac{C}{n-1}} \right) \leq \alpha$$

This results in a balance drawn by the nature of the student's $t$ distribution: the High-Density Region (HDR) narrows with smaller sample standard deviation as well as larger sample sizes. This is demonstrated by the reduced equivalent cumulative evidence, equal to $n\zeta_j$, that is required by comparisons using Bayes Factors.

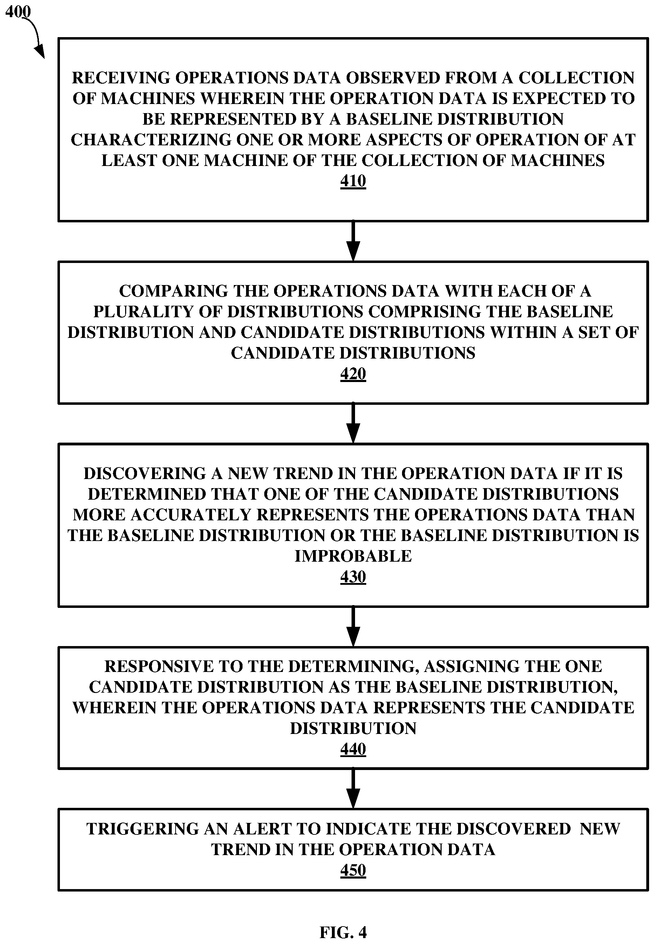

Figure 4 is a flowchart of method 400 implemented by a computing device for monitoring a collection of machines. Method 400 includes receiving operations data observed from a collection of machines wherein the operations data is expected to be represented by a baseline distribution characterizing one or more aspects of operation of at least one machine of the collection of machines (410).

The method further includes comparing the operations data with each of a plurality of distributions comprising the baseline distribution and candidate distributions within a set of candidate distributions, wherein the candidate distributions are predicted to characterize one or more aspects of operation of at least one machine of the collection of machines (420).

The method further includes discovering a new trend in the operations data if it is determined that one of the candidate distributions more accurately represents the operations data than the baseline distribution or the baseline distribution is improbable (430). In some examples, the computing device determines that the baseline distribution is an improbable representation of the process regardless of candidate distributions. This allows use of NHST that have composite hypotheses.

Responsive to the determining, assigning the one candidate distribution as the baseline distribution (440).

The method further includes triggering an alert to indicate the discovered new trend in the operations data (450).

In some examples, a plurality of the candidate distributions may be periodically updated by the candidate distribution refinement unit 220 based on operations data periodically received by the candidate distribution refinement unit 220. In some examples, the candidate distribution updates may be made simultaneously, before, or after hypothesis testing is performed.

In some examples, the comparisons are made based on a calculated Bayes Factor representing a ratio indicating a probability of one distribution being selected relative to another using Bayesian logic. In some examples, the comparisons are based on a calculated difference in sample Kullback-Liebler divergence of two different distributions where the KL-divergence represents the measure of expected logarithmic deviation of the distributions when drawing random samples from the true, but unknown, distribution.

### Candidate Distribution Refinement

Candidate distribution refinement determines one or more candidate distributions that better represent the operations data 115. In some examples, this occurs after the hypothesis testing algorithm rejects the baseline distribution. In some examples, the distribution refinement occurs prior to hypothesis testing to provide the most up-to-date characterizations of operations.

The candidate distributions provide for a wide variety and amount of operations data 115. In some examples, the amount of operations data 115 is small (e.g., a given cockpit warning light that occurs once in hundreds of thousands of operating hours). Others have much larger data sets (e.g., flight hours per sortie which is recorded for every flight).

Statistical methods that use Bayesian approaches for parametric estimation can require less operations data than those based upon Maximum Likelihood Estimate (MLE) common in Frequentist methods, which assume complete ignorance when initialized, as Bayesian approaches are seeded with exogenous information (see Equation 4). Let $\theta$ be an unknown parameter that we believe to be distributed per the Probability Density Function (PDF) $P(\theta)$, known as the 'prior'. We can then establish the 'posterior' distribution, $P(\theta|D)$, using the prior, distribution likelihood - $P(D|\theta)$, and the marginal likelihood - $P(D)$.

(Eq. 4)

$$P(\theta|D) = \frac{P(D|\theta)P(\theta)}{P(D)}$$

In some examples such as in the field of aerospace, original design estimates provide context and values to set $P(\theta)$ for a given operations data 115. For example, a given Line Replaceable Unit (LRU) on an aircraft platform might be identical or highly similar in construction to a fielded component. The expectations for characteristics are set, such as Flight Hours Between Removal (FHBR) with those of akin components. In some examples, conservative estimates from engineering analysis designs can be used for new-in-class components.

In some examples, current implementations of distribution refinement are based upon Maximum A Posteriori (MAP) estimates. In some examples, the estimates are currently formed using a special class of $P(\theta)$: conjugate priors due to the computational convenience. Conjugate priors distill the evolution of prior to posterior as an algebraic relation. As such, numerical approaches that can be computationally burdensome, such as those based on Monte Carlo sampling, are avoided. This is the main driver of distribution options provided in Table 1. These candidate distributions represent a broad group of continuous distributions with domain being the positive real numbers with small exceptions.

Table 1: Candidate Distributions

| Distribution | Parameters | Definition |
|---|---|---|
| $\chi$ | $k$ | $p(x\|k) = \frac{x^{k-1}}{2^{(k/2-1)}\Gamma(k/2)}\exp(-x^2/2)$ |
| $\chi^2$ | $k$ | $p(x\|k) = \frac{x^{k/2-1}}{2^{k/2}\Gamma(k/2)}\exp(-x/2)$ |
| Erlang | $(k, \lambda)$ | $p(x\|k, \lambda) = \frac{\lambda^k x^{k-1}}{(k-1)!}\exp(-\lambda x)$ |
| Exponential | $\lambda$ | $p(x\|\lambda) = \lambda\exp(-\lambda x)$ |
| Gamma | $(\alpha, \beta)$ | $p(x\|\alpha, \beta) = \frac{\beta^\alpha x^{\alpha-1}}{\Gamma(\alpha)}\exp(-\beta x)$ |
| Generalized-Gamma | $(\alpha, \beta, \gamma)^3$ | $p(x\|\alpha, \beta) = \frac{|\gamma|\beta^\alpha x^{\alpha\gamma-1}}{\Gamma(\alpha)}\exp(-\beta x^\gamma)$ |
| Half-Normal | $\sigma$ | $p(x\|\sigma) = \sqrt{\frac{2}{\pi\sigma^2}}\exp(-\frac{x^2}{2\sigma^2})$ |
| Inverse-Gamma | $(\alpha, \beta)$ | $p(x\|\alpha, \beta) = \frac{\beta^\alpha}{x^{\alpha+1}\Gamma(\alpha)}\exp(-\frac{\beta}{x})$ |
| Inverse-Gaussian | $(\mu, \lambda)$ | $p(x\|\mu, \lambda) = \sqrt{\frac{\lambda}{2\pi x^3}}\exp(-\frac{\lambda(x-\mu)^2}{2\mu^2 x})$ |
| Lognormal | $(\mu, \sigma)$ | $p(x\|\mu, \sigma) = \frac{1}{x\sigma\sqrt{2\pi}}\exp(-\frac{(\ln(x)-\mu)^2}{2\sigma^2})$ |
| Nakagami | $(m, \Omega)$ | $p(x\|m, \Omega) = \frac{2m^m}{\Gamma(m)\Omega^m}x^{(2m-1)}\exp(-\frac{m}{\Omega}x^2)$ |
| Normal | $(\mu, \sigma)$ | $p(x\|\mu, \sigma) = \frac{1}{\sigma\sqrt{2\pi}}\exp(\frac{-(x-\mu)^2}{2\sigma^2})$ |

(continued)

| Distribution | Parameters | Definition |
|---|---|---|
| Rayleigh | $\sigma$ | $p(x\|\sigma) = \frac{x}{\sigma^2}\exp(-\frac{x^2}{2\sigma^2})$ |
| Reciprocal-Inverse-Gaussian | $(\mu, \gamma)$ | $p(x\|\mu, \gamma) = \sqrt{\frac{\gamma}{2\pi x}}\exp\left(-\frac{\gamma(1-\mu x)^2}{2\mu^2 x}\right)$ |

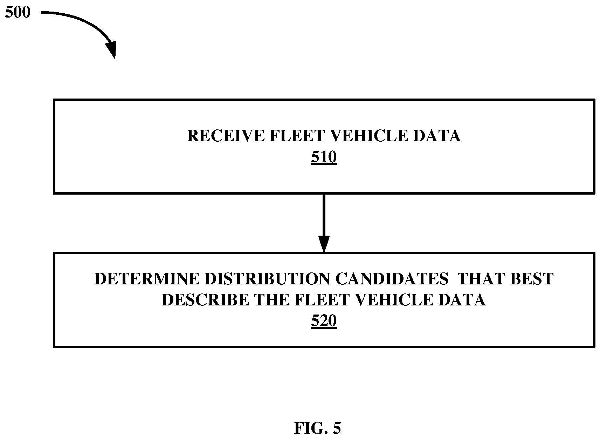

Figure 5 illustrates method 500 for performing candidate distribution refinement. The method includes receiving operations data 115 (block 510). Distribution candidates are then determined that describe operations data 115 (block 520).

In some examples, the distribution refinement is based upon MAP estimates formed using conjugates priors. In some examples, the distribution refinement is based upon an MLE estimate. In some examples, the distribution refinement is based upon the full posterior estimates of parameters.

***Candidate Distribution Selection***

The candidate distribution selection evaluates the candidate distributions and selects the one for the new baseline distribution. The analysis uses the posterior distribution $P(\theta\,|D)$ established using the entire operations data 115 $(D)$ to calculate the likelihood, $P(D|M)$. To reduce the computational burden, the analysis uses a recursive approximation as shown in Equation 5, which is a blend of an integration of $P(D|M_j, \theta)$ over the prior and posterior distributions. This reduces the computational burden by just requiring an incremental modification of the total model evidence with the most recent samples evidence. Use of the posterior distribution of parameters reflects the evolution of parameters in successive Bayesian inferences. $k$ is an integer equal to the number of times the candidate distribution selection unit 230 has been ran. $\overline{D}_{k+1}$ is a set of the operations data 115 that has been determined since the last run of the candidate distribution selection unit 230. Bayes' theorem is then used to establish the recursive relations shown in Equation 5 where $\lambda \in [0, 1]$ is a geometric decay. The geometric decay allows for a soft horizon to be set on the operations data 115 which assists when a process is slowly varying, and thus not stationary and to negate long-term effects of poor prior specification.

(Eq. 5)

$$P(D_{k+1}|M_j) := P(D_k|M_j)^{\lambda}\int_{\theta_{k+1}\in\Theta} P(\bar{D}_{k+1}|\theta_{k+1}, M_j)P(\theta_{k+1})d\theta_{k+1}$$

where

$D_{k+1} := D_k \cup \overline{D}_{k+1}$
$P(\theta_{k+1}) := P(\theta_k|\overline{D}_{k+1})$

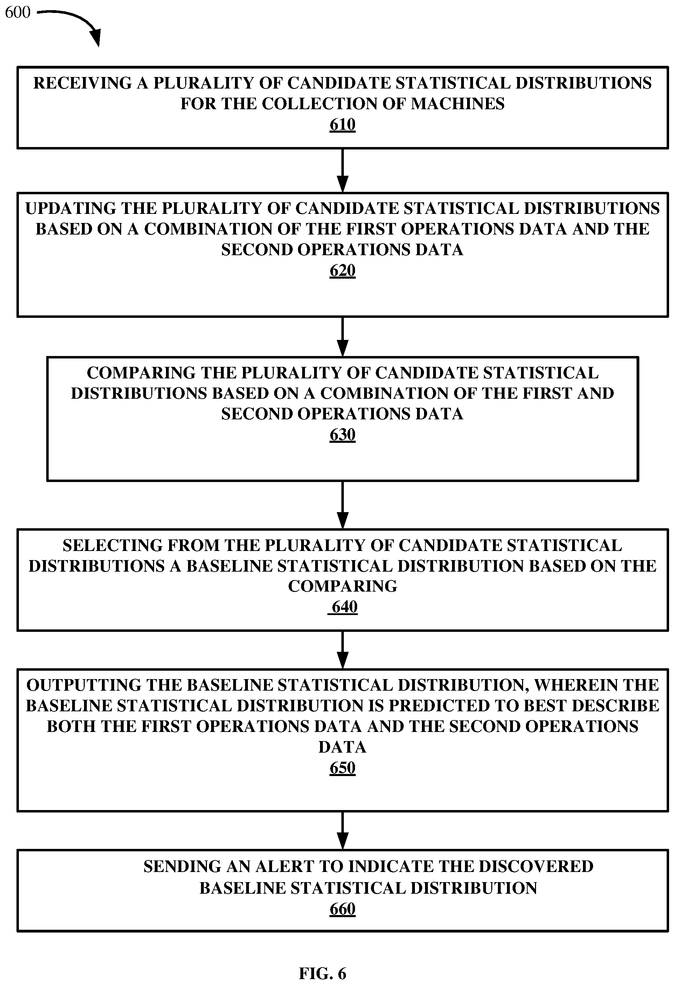

Figure 6 illustrates an example of a method 600 implemented by a computing device of monitoring a collection of machines. The method 600 receiving a plurality of candidate statistical distributions for the collection of machines, each of the plurality of candidate statistical distributions describes a first operations data and a second operations data characterizing one or more aspects of at least one machine of the collection of machines (block 610).

In some examples, the second operations data was used to set a prior distribution for each of the plurality of candidate statistical distributions.

In some examples, the second operations data was received before receiving the first operations data.

In some examples, one of the plurality of candidate statistical distributions are selected from a group of distributions consisting of chi, chi-squared, Erlang, exponential, gamma, generalized-gamma, half-normal, inverse-gamma, inverse-Gaussian, lognormal, Nakagami, normal, Rayleigh, and reciprocal-Inverse-Gaussian distributions.

In some examples, the refined distribution candidates were determined based upon MAP estimates formed using conjugate priors. In some examples, the refined distribution candidates were determined based upon an MLE estimate. In some examples, distribution candidates are determined based upon the posterior distribution of parameters.

Method 600 includes updating the plurality of candidate statistical distributions based on a combination of the first operations data and the second operations data (block 620).

In some examples, the updating and comparing is recursively performed for a kth time, wherein $k$ is an integer equal to a number of times new first operations data has been received.

The method further includes comparing the plurality of candidate statistical distributions based up on a combination of the first and second operations data (block 630).

In some examples, comparing is performed in real-time as datum is received.

In some examples, selecting from the plurality of candidate distributions is recursively performed according to selecting candidate $j$ associated with the largest $P(D_{k+1}|M_j)$ as shown in equation 5 where $P(.|M_j)$ is the evidence of model $M_j$, $D_k$ is the second operations data and $\overline{D}_{k+1}$ is the first operations data, $\theta_k$ and $\theta_{k+1}$ are the parameters of model $M_j$ and $\lambda$ is a constant geometric forgetting factor.

Method 600 further includes selecting from the plurality of candidate statistical distributions a baseline statistical distribution based on the comparing (640). The method further includes outputting the baseline statistical distribution, wherein the baseline statistical distribution is predicted to best describe both the first operations data and the second operations data (650).

Upon selecting and outputting the discovered baseline statistical distribution, method 600 further includes sending an alert to indicate the discovered baseline statistical distribution was selected (660). In some examples, the alert may be sent to an internal monitoring system for monitoring trends in the operations data 115. In some examples, the alert may be sent to an external monitoring system for monitoring trends in the operations data 115. In some examples, the alert may be sent wirelessly through a wireless communication network to a remote node.

According to some aspects, methods 300, 400, 500 and 600 are performed by a computing device for monitoring a fleet of vehicles. The computing device includes processing circuitry and memory, the memory containing instructions executable by the processing circuity.

According to some aspects, a non-transitory computer-readable medium storing a computer program product for controlling a computing device, the computer program product comprising software instructions that, when run on the computing device, cause the computing device to perform the steps of methods 300, 400, 500 and 600.

The various processes receive operations data about a collection of machines. The operations data are used for testing a baseline distribution and a candidate distribution. When the baseline distribution is determined is not valid, a new baseline distribution is necessary to define the operations data. The new baseline distribution provides for making future actions on how to manage and operate the collection of machines. A number of different distributions are analyzed to determine which one best fits the operations data. The selected distribution is then assigned as the baseline distribution. An alert to indicate the discovered baseline statistical distribution may be sent to an internal or external monitoring system. In some examples, the alert may be sent wirelessly through a wireless communication network to a remote node.

In some examples, the triggered alert results in a change to one or more operational aspects of the machines. The alert indicates that the change is necessary as the alert indicates an issue with one or more current procedures. In one specific example in which the method monitors a collection of machines, in response to the alert, one or more changes are made to the way the machines are operated. One specific example includes replacing a component in the machines more frequently.

In some examples, the methods 300, 400, 500, 600 are used to monitor a fleet of vehicles, and specifically for scheduling maintenance of the vehicles. An initial maintenance schedule is developed and used for the fleet. When a new trend is determined using the methods, the maintenance schedule is changed to account for the trend. The ability to amend the maintenance schedule based on a new trend provides for better performance of the individual vehicles and the overall fleet. In one example, the initial maintenance schedule includes performing an oil change every 6,000 miles. After servicing the fleet for a period of time, a trend is found that engine wear is occurring at a higher rate than expected. In view of the new trend, the maintenance schedule is adjusted to change the oil in the vehicles every 5,000 miles. In a similar example, the maintenance schedule is adjusted to maintain the oil changes every 6,000 miles, but the type of oil that is used in the vehicles is changed to account for the increased engine wear. The identification of the trend (i.e., increased engine wear) and adjusting the maintenance schedule in view of the trend provides for longer life expectancy for the vehicles and the overall fleet.

For example, the processes are used to determine service for a group of machines. Operations data about the machines are expected to perform according to a baseline distribution. Expected maintenance and various other performance aspects of the machines are set based on the baseline distribution. The operations data that is received is compared with the baseline distribution and various other distributions. If it is determined that another distribution is better represents the operations data, the distribution is assigned as the new baseline. The performance aspects of the machines are set based on the new distribution. One advantage of this process is a more accurate baseline is determined relatively sooner in the process. Instead of continuing to base decisions using the baseline distribution, a more accurate distribution is used which better represents the operations data and provides for more accurate expected future issues with the machines. An alert indicating the change can be sent when there is a change.

For example, operations data can be safety or performance related. Further to the examples outlined herein, the operations data can be inefficient operation of the machine. The operations data may characterize utilization of each of the machines, reliability of each of the machines, hours of operation of each of the machines, fuel or power usage of each of the machines, or maintenance records for each of the machines. In some examples, the operations data can indicate a deterioration in the performance of the machines. Additionally or alternatively in the examples, the operations data can indicate increasing vibrations sensed in the machines, or increasing fuel or power usage. The operations data can optionally be provided by sensors of the machines. In some examples, the sensors are health and usage monitoring sensors, strain sensors, vibration sensors, impact sensors, wear sensors, or corrosion sensors.

In some examples, the maintenance can comprise any of inspection of the machine, repair of the machine, and/or retirement of the machine. In an example, the collection of machines can be a fleet of vehicles, the fleet may comprise one or more fleet vehicles. In some examples provided herein, the operations data can characterize the distance traveled by each of the vehicles and/or the hours of operation completed by each of the vehicles. In some examples, the fleet of vehicles can be a fleet of aircraft or other ground-based vehicles (e.g., wheeled- or track-based vehicles).

In some examples described above, scheduling maintenance of one or more machines (e.g., a vehicle or a fleet) and/or maintaining a collection of machines is performed according to the schedule.

In some examples, the operation data are safety or performance related. Monitoring this data can provide for the machines to be maintained or operated in a manner to ensure safe operation and/or safe usage. Performance-related aspects provide for benefits including but not limited to more efficient use, longer lifespan, and proper maintenance scheduling. Examples include but are not limited to machine utilization, machine longevity, machine reliability, maintenance completion times, fix-effectiveness, customer satisfaction, and customer retention rates.

In some examples, the operations data indicates an expected failure of a component of a machine or inefficient operation of the machine. Monitoring these aspects provides for maintenance of the machine prior to having operational or efficiency issues. Additionally or alternatively, affected machines can be removed from use prior to reaching failure. This provides for more efficient use of the vehicle and safe and efficient operation.

In some examples, the operation data characterize utilization of each of the machines, reliability of each of the machines, hours of operation of each of the machines, fuel or power usage of each of the machines, or maintenance records for each of the machines. This operational data can be used to optimize efficiency of the vehicles and fleet and ensure proper operation of the vehicles. Use of this information can provide for removing machines from use prior to experiencing performance issues.

In some examples, the operation data indicate a deterioration in the performance of the machines. Monitoring this operation data provides for more efficient use of the machine and the overall group of machines. Further, this operation data can prolong the life of the machine as maintenance can be performed prior to damage being done to the machine due to deterioration. Additionally or alternatively, affected machines can be removed from use prior to deteriorating beyond a threshold. In some examples, this provides for more efficient use of the machine and safe operation.

In some examples, the operation data indicate increasing vibrations sensed in the machines or increase fuel or power usage. This operation data can be an indicator of future issues with the machine. Monitoring this data can provide for removing the machine from use and providing maintenance prior to reaching a stage of use that could cause damage to the machine and/or inefficient use of the machine. Vibrations and increased fuel or power usage have been determined to be indicators of approaching issues with a machine. In some examples, machines are removed to provide for a more comfortable ride for a passenger.

In some examples, the operation data are provided by sensors of the machines. The sensors are configured and positioned to provide accurate data that is necessary for an accurate analysis. Monitoring aspects are not effective when the underlying data is not an accurate reflection of the actual aspects of the machines. In some examples, the sensors are health and usage monitoring sensors. These sensors indicate usage of the vehicles to monitor operational aspects and ensure operation within an expected range. In some examples, the sensors are strain sensors, vibration sensors, impact sensors, wear sensors, or corrosion sensors. These types of sensors provide accurate data about a range of aspects that can be monitored and analyzed. This type of data has been determined to be an effective indicator of future issues when the data exceeds certain thresholds.

In some examples, the maintenance comprises any of inspection of the machine, repair of the machine, or retirement of the machine. The maintenance aspects of the machine provide insightful data that provides accurate and useful output. Issues that have affected the machine provide valuable data that can determine future operational aspects about the other machines.

In some examples, the machines scheduled for maintenance are prioritized according to how much the indicator exceeds the threshold. In some examples, it has been found that the indicator provides an accurate estimate of when maintenance is due. The farther beyond the indicator that the machine continues to operate the more likely the machine is to have an issue with operation.

In some examples, the collection of machines is a fleet of vehicles. Vehicles can be monitored for a variety of operation data that is used to indicator future operation aspects of the vehicles.

In some examples, the operation data characterizes the distance traveled by each of the vehicles and/or the hours of operation completed by each of the vehicles. These aspects provide a good indication of expected future operation of the vehicle. For example, the greater the number of miles traveled and/or flights by an aircraft is an effective indicator of when maintenance is needed to ensure the aircraft continues to effectively operate. In some examples, thresholds are set for distance and/or hours of operation and vehicles are removed from service for maintenance once the thresholds have been reached.

In some examples, for illustration the fleet of vehicles is a fleet of aircraft, but may also include a variety of vehicles described below. Operational data can be obtained for aircraft that have been found to be effective in predicting how an aircraft and a fleet of aircraft will operate in the future. In some examples, maintenance work can be scheduled and/or performed for aircraft based on the monitored operation data.

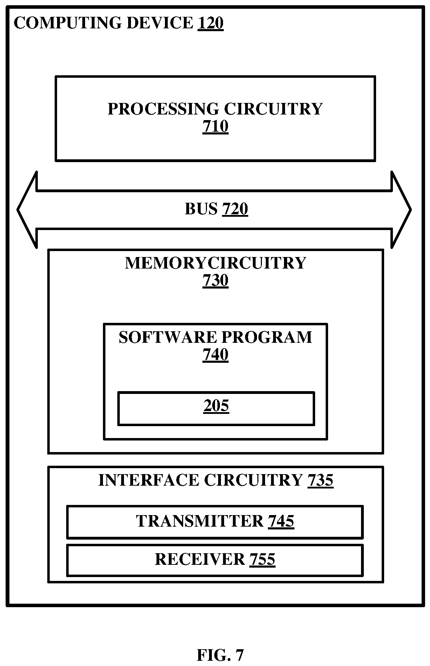

Figure 7 is a schematic block diagram that illustrates a computing device 120 according to one or more aspects of the present application. The example computing device includes processing circuitry 710, memory circuitry 730 and the interface circuitry 735. The processing circuitry 710 is communicatively coupled to the memory circuitry 730 and the interface circuitry 735 e.g., via one or more buses 720. The processing circuitry 710 may include one or more microprocessors, microcontrollers, hardware circuits, discrete logic circuits, hardware registers, digital signal processors (DSPs), field-programmable gate arrays (FPGAs), application-specific integrated circuits (ASICs), or a combination thereof. For example, the processing circuitry 710 may be programmable hardware capable of executing a software program 740 stored, e.g., as a machine-readable computer program in the memory circuitry 730. The memory circuitry 730 of the various aspects may include any non-transitory machine-readable media known in the art or that may be developed, whether volatile or non-volatile, including, but not limited to, solid state media (e.g., SRAM, DRAM, DDRAM, ROM, PROM, EPROM, flash memory, solid state drive, etc.), removable storage devices (e.g., Secure Digital (SD) card, miniSD card, microSD card, memory stick, thumb-drive, USB flash drive, ROM cartridge, Universal Media Disc), fixed drive (e.g., magnetic hard disk drive), or the like, wholly or in any combination.

The interface circuitry 735 may be a controller hub configured to control the input and output (I/O) data paths of the computing device 120. Such I/O data paths may include data paths for exchanging signals over a communications network and data paths for exchanging signals with an electronic device, node or a user. For example, the interface circuitry 735 may include output circuitry (e.g., transmitter circuitry 745 configured to send communication signals over the communications network) and input circuitry (e.g., receiver circuitry 755 configured to receive communication signals over the communications network).

The interface circuitry 735 may be implemented as a unitary physical component or as a plurality of physical components that are contiguously or separately arranged, any of which may be communicatively coupled to any other or may communicate with any other via the processing circuitry 710.

Other aspects include a non-transitory computer-readable medium (e.g., the memory circuitry 730) storing a computer program (e.g., software instructions 740) that includes software instructions that, when run on processing circuitry 710 of the computing device 120, causes the computing device 120 to perform any of the methods disclosed herein.

In some examples, the aspects disclosed herein are applicable to a management system 100 that monitors the fleet 110. The fleet 110 may include a variety of vehicles 101 including but are not limited to manned aircraft, unmanned aircraft, manned spacecraft, unmanned spacecraft, manned rotorcraft, unmanned rotorcraft, satellites, rockets, missiles, manned terrestrial vehicles, unmanned terrestrial vehicles, manned surface water borne vehicles, unmanned surface water borne vehicles, manned sub-surface water borne vehicles, unmanned sub-surface water borne vehicles, and combinations thereof.

Further, the disclosure comprises examples according to the following clauses:

Clause 1. A method implemented by a computing device of monitoring a collection of machines, the method comprising: receiving a plurality of candidate statistical distributions for the collection of machines, each of the plurality of candidate statistical distributions describes a first operations data and a second operations data characterizing one or more aspects of at least one machine of the collection of machines; updating, the plurality of candidate statistical distributions based on a combination of the first operations data and the second operations data; comparing, the plurality of candidate statistical distributions based on a combination of the first and second operations data; selecting from the plurality of candidate statistical distributions a baseline statistical distribution based on the comparing; outputting the baseline statistical distribution, wherein the baseline statistical distribution is predicted to best describe both the first operations data and the second operations data; and sending an alert to indicate the discovered baseline statistical distribution.

Clause 2. The method of clause 1, wherein the updating and comparing is recursively performed for a $k$th time, wherein $k$ is an integer equal to a number of times new first operations data has been received.

Clause 3. The method of clause 2, wherein the second operations data was used to set a prior distribution for each of the plurality of candidate statistical distributions.

Clause 4. The method of clause 1, wherein the second operations data was received before receiving the first operations data.

Clause 5. The method of clause 1, wherein one of the plurality of candidate statistical distributions are selected from a group of distributions consisting of: chi, chi-squared, Erlang, exponential, gamma, generalized-gamma, half-normal, inverse-gamma, inverse-Gaussian, lognormal, Nakagami, normal, Rayleigh, and reciprocal-Inverse-Gaussian distributions.

Clause 6. The method of clause 1, wherein the comparing is performed in real-time as datum is received.

Clause 7. The method of clause 1, wherein the selecting from the plurality of candidate distributions is recursively performed according to selecting candidate $j$ associated with a largest $P(D_{k+1}|M_j)$ where $P(.|M_j)$ is the evidence of model $M_j$, $D_k$ is the second operations data and $\bar{D}_{k+1}$ is the first operations data, $\theta_k$ and $\theta_{k+1}$ are the parameters of model $M_j$, and $\lambda$ is a constant geometric forgetting factor:

$$P(D_{k+1}|M_j) := P(D_k|M_j)^{\lambda} \int_{\theta_{k+1}\in\Theta} P(\bar{D}_{k+1}|\theta_{k+1}, M_j)P(\theta_{k+1})d\theta_{k+1}$$

where

$$D_{k+1} := D_k \cup \bar{D}_{k+1}$$
$$P(\theta_{k+1}) := P(\theta_k|\bar{D}_{k+1})$$

Clause 8. The method of clause 1, further comprising: updating the plurality of candidate statistical distributions is based upon estimates formed using conjugate priors.

Clause 9. The method of clause 1, wherein the first operations data and the second operations data are safety or performance related.

Clause 10. The method of clause 1, wherein the first operations data and the second operations data characterize utilization of the machines, reliability of the machines, hours of operation of the machines, fuel or power usage of the machines, or maintenance records of the machines.

Clause 11. The method of clause 1, wherein the first operations data and the second operations data indicate a deterioration in the performance of the machines.

Clause 12. The method of any of clauses 1 to 11, wherein the operation data are collected in real-time during a commercial aircraft flight operation, a military aircraft maintenance procedure, a military aircraft flight operation, or during a commercial aircraft maintenance procedure.

Clause 13. The method of any of clauses 1 to 12, wherein the operation data indicate increasing vibrations sensed in the machines or increasing fuel or power usage.

Clause 14. The method of any of clauses 1 to 13, wherein the operation data are provided by sensors of the machines.

Clause 15. The method of clause 14, wherein the sensors are health and usage monitoring sensors.

Clause 16. The method of clause 14 or 15, wherein the sensors are strain sensors, vibration sensors, impact sensors, wear sensors, or corrosion sensors.

Clause 17. The method of any of clauses 1 to 16, wherein the operations data comprises maintenance including any of inspection of the machine, repair of the machine, or retirement of the machine.

Clause 18. The method of any of clauses 1 to 17, wherein the collection of machines is a fleet of vehicles.

Clause 19. The method of clause 18, wherein the operation data characterize the distance travelled by each of the vehicles and/or the hours of operation completed by each of the vehicles.

Clause 20. The method of clause 18 or 19, wherein the fleet of vehicles is a fleet of aircraft.

Clause 21. A method of maintaining a collection of machines comprising: the method of scheduling maintenance of any of clauses 1 to 20; and maintaining the collection of machines according to a schedule.

Clause 22. A computing device comprising a hardware processor and a memory, the memory containing computer program instructions that, when executed by the hardware processor, cause the computing device to perform the method of any of clauses 1 to 21.

Clause 23. A computer program comprising computer program instructions that, when executed by a one or more hardware processors of a computing device, cause the computing device to perform the method of any of clauses 1 to 22.

Clause 24. A non-transitory computer-readable medium having stored thereon the computer program of clause 23.

Clause 25. A computing device for monitoring a collection of machines, the computing device comprising: processing circuitry and memory, the memory containing instructions executable by the processing circuity whereby the computing device is configured to: receive a plurality of candidate statistical distributions for a collection of machines, each of the plurality of candidate statistical distributions describes a first operations data and a second operations data characterizing one or more aspects of at least one machine of the collection of machines; update, the plurality of candidate statistical distributions based on a combination of the first operations data and the second operations data; compare the plurality of candidate statistical distributions based on a combination of the first and second operations data; select from the plurality of candidate statistical distributions a baseline statistical distribution based on the comparing, wherein the baseline statistical distribution is predicted to best describe both the first operations data and the second operations data; and output an alert indicating the baseline statistical distribution.

Clause 26. The computing device of clause 25, wherein the updating and comparing is recursively performed for a kth time, wherein k is an integer equal to a number of times new first operations data has been received.

Clause 27. The computing device of clause 25 or 26, wherein the second operations data was used to set a prior distribution for each of the plurality of candidate statistical distributions.

Clause 28. The computing device of any of clauses 25 to 27, wherein the second operations data was received before receiving the first operations data.

Clause 29. The computing device of any of clauses 25 to 28, wherein one of the plurality of candidate statistical distributions are selected from a group of distributions consisting of: chi, chi-squared, Erlang, exponential, gamma, generalized-gamma, half-normal, inverse-gamma, inverse-Gaussian, lognormal, Nakagami, normal, Rayleigh, and reciprocal-Inverse-Gaussian distributions.

Clause 30. The computing device of any of clauses 25 to 29, wherein the comparing is performed in real-time as datum is received.

Clause 31. The computing device of any of clauses 25 to 30, is further configured to: select from the plurality of candidate statistical distributions is recursively performed according to selecting candidate $j$ associated with a largest $P(D_{k+1}|M_j)$ where $P(.|M_j)$ is the evidence of a model $M_j$, $D_k$ is a second operations data and $\bar{D}_{k+1}$ is the first operations data, $\theta_k$ and $\theta_{k+1}$ are parameters of model $M_j$, and $\lambda$ is a constant geometric forgetting factor:

$$P(D_{k+1}|M_j) := P(D_k|M_j)^\lambda \int_{\theta_{k+1}\in\Theta} P(\bar{D}_{k+1}|\theta_{k+1}, M_j)P(\theta_{k+1})d\theta_{k+1}$$

wlic,re,

$$D_{k+1} := D_k \cup \bar{D}_{k+1}$$
$$P(\theta_{k+1}) := P(\theta_k|\bar{D}_{k+1})$$

Clause 32. The computing device of any of clauses 25 to 31, further is further configured to update the plurality of candidate statistical distributions is based upon estimates formed using conjugate priors.

Clause 33. A non-transitory computer-readable medium storing a computer program product for controlling a computing device, the computer program product comprising software instructions that, when run on the computing device, cause the computing device to: receive a plurality of candidate statistical distributions for a collection of machines, each of the plurality of candidate statistical distributions describes a first operations data and a second operations data characterizing one or more aspects of at least one machine of the collection of machines; update the plurality of candidate statistical distributions based on a combination of the first operations data and the second operations data; compare the plurality of candidate statistical distributions based on a combination of the first and second operations data; select from the plurality of candidate statistical distributions a baseline statistical distribution based on the comparing; trigger an alert to indicate the baseline statistical distribution; and wherein the baseline statistical distribution is predicted to best describe both the first operations data and the second operations data.

Clause 34. A method of scheduling maintenance of a collection of machines, comprising: the method of monitoring a collection of machines of any of clauses 1 to 20; and amending a maintenance schedule of the collection of machines to account for the new trend in the operations data.

Clause 35. A method of maintaining a collection of machines comprising: the method of scheduling maintenance of clause 34; and maintaining the collection of machines according to the schedule.

Clause 36. A computer-implemented method of scheduling maintenance of a collection of machines, comprising: receiving a plurality of candidate statistical distributions for the collection of machines, each of the plurality of candidate statistical distributions describes a first operations data and a second operations data characterizing one or more aspects of at least one machine of the collection of machines; updating the plurality of candidate statistical distributions based on a combination of the first operations data and the second operations data; comparing the plurality of candidate statistical distributions based on a combination of the first and second operations data; selecting from the plurality of candidate statistical distributions a baseline statistical distribution based on the comparing; outputting the baseline statistical distribution, wherein the baseline statistical distribution is predicted to best describe both the first operations data and the second operations data; and amending a maintenance schedule of the collection of machines to account for the new trend in the operations data.

Clause 37. The method of clause 36, wherein the first operations data and the second operations data are safety or performance related.

Clause 38. The method of clause 37, wherein the first operations data and the second operations data characterize utilization of the machines, reliability of the machines, hours of operation of the machines, fuel or power usage of the machines, or maintenance records of the machines.

Clause 39. The method of clause 37 or 38, wherein the first operations data and the second operations data indicate a deterioration in the performance of the machines.

Clause 40. The method of any of clauses 37 to 39, wherein the operation data indicate increasing vibrations sensed in the machines, or increasing fuel or power usage.

Clause 41. The method of any of clauses 37 to 40, wherein the operation data are provided by sensors of the machines.

Clause 42. The method of clause 41, wherein the sensors are health and usage monitoring sensors.

Clause 43. The method of clause 41 or 42, wherein the sensors are strain sensors, vibration sensors, impact sensors, wear sensors, or corrosion sensors.

Clause 44. The method of any of clauses 36 to 43, wherein the operations data comprises maintenance including any of inspection of the machine, repair of the machine, or retirement of the machine.

Clause 45. The method of any of clauses 36 to 44, wherein the collection of machines is a fleet of vehicles.

Clause 46. The method of clause 45, wherein the operation data characterize the distance travelled by each of the vehicles and/or the hours of operation completed by each of the vehicles.

Clause 47. The method of clause 45 or 46, wherein the fleet of vehicles is a fleet of aircraft.

Clause 48. The method of any of clauses 36 to 47, wherein the operation data is collected in real-time during a commercial aircraft flight operation, a military aircraft maintenance procedure, a military aircraft flight operation, or during a commercial aircraft maintenance procedure.

Clause 49. The method of any of clauses 36 to 48, wherein the updating and comparing is recursively performed for a $k$th time, wherein $k$ is an integer equal to a number of times new first operations data has been received.

Clause 50. The method of clause 49, wherein the second operations data was used to set a prior distribution for each of the plurality of candidate statistical distributions.

Clause 51. The method of any of clauses 36 to 50, wherein the second operations data was received before receiving the first operations data.

Clause 52. The method of any of clauses 36 to 51, wherein one of the plurality of candidate statistical distributions are selected from a group of distributions consisting of: chi, chi-squared, Erlang, exponential, gamma, generalized-gamma, half-normal, inverse-gamma, inverse-Gaussian, lognormal, Nakagami, normal, Rayleigh, and reciprocal-Inverse-Gaussian distributions.

Clause 53. The method of any of clauses 36 to 52, wherein the comparing is performed in real-time as datum is received.

Clause 54. The method of any of clauses 36 to 53, wherein the selecting from the plurality of candidate distributions is recursively performed according to selecting candidate j associated with a largest $P(D_{k+1}|M_j)$ where $P(.|M_j)$ is the evidence of model $M_j$, $D_k$ is the second operations data and $\overline{D}_{k+1}$, is the first operations data, $\theta_k$ and $\theta_{k+1}$ are the parameters of model $M_j$, and $\lambda$ is a constant geometric forgetting factor:

$$P(D_{k+1}|M_j) := P(D_k|M_j)^{\lambda} \int_{\theta_{k+1}\in\Theta} P(\bar{D}_{k+1}|\theta_{k+1}, M_j)P(\theta_{k+1})d\theta_{k+1}$$

where

$$D_{k+1} := D_k \cup \overline{D}_{k+1}$$
$$P(\theta_{k+1}) := P(\theta_k|\overline{D}_{k+1})$$

Clause 55. The method of any of clauses 36 to 54, further comprising: updating the plurality of candidate statistical distributions is based upon estimates formed using conjugate priors.

Clause 56. A method of maintaining a collection of machines comprising: the method of scheduling maintenance of any of clauses 36 to 55; and maintaining the collection of machines according to a schedule.

Clause 57. A computing device comprising a hardware processor and a memory, the memory containing computer program instructions that, when executed by the hardware processor, cause the computing device to perform the method of any of clauses 36 to 56.

Clause 58. A computer program comprising computer program instructions that, when executed by a one or more hardware processors of a computing device, cause the computing device to perform the method of any of clauses 36 to 56.

Clause 59. A non-transitory computer-readable medium having stored thereon the computer program of clause 58.

A variety of different machines are applicable, including but not limited to various vehicles (e.g., such as aircraft, ships, trucks, cars), manufacturing equipment, computing equipment, and office equipment. In some examples disclosed above, the aspects are disclosed in the context of monitoring a fleet of aircraft. This is one example, but the disclosure is not limited to this application. Examples of vehicles include those that can be used in various environments (e.g., ground-based, water-based, air-based, and space-based). Vehicles include but are not limited to manned aircraft, unmanned aircraft, manned spacecraft, unmanned spacecraft, manned rotorcraft, unmanned rotorcraft, satellites, rockets, missiles, manned terrestrial vehicles, unmanned terrestrial vehicles, manned surface water borne vehicles, unmanned surface water borne vehicles, manned sub-surface water borne vehicles, unmanned sub-surface water borne vehicles, and combinations thereof.

These aspects can also be used in other contexts than fleet management. For example, distributions may be used in radio telecommunications, finance, healthcare, and various other applications.

Aspects of the present disclosure may, of course, be carried out in other ways than those specifically set forth herein without departing from essential characteristics of the present disclosure. The present aspects are to be considered in all respects as illustrative and not restrictive, and all changes coming within the meaning and equivalency range of the appended claims are intended to be embraced therein.

**Claims**

1. A method implemented by a computing device (120) of monitoring a collection of machines, the method comprising:

   receiving a plurality of candidate statistical distributions (215) for the collection of machines, each of the plurality of candidate statistical distributions (215) describes a first operations data and a second operations data characterizing one or more aspects of at least one machine of the collection of machines;
   updating, recursively for a k number of times, the plurality of candidate statistical distributions (215) based on a combination of the first operations data and the second operations data;
   comparing, recursively for the k number of times, the plurality of candidate statistical distributions (215) based on a combination of the first and second operations data;
   selecting from the plurality of candidate statistical distributions (215) a baseline statistical distribution (245) based on the comparing;
   outputting the baseline statistical distribution (245), wherein the baseline statistical distribution (245) is predicted to best describe both the first operations data and the second operations data; and
   sending an alert (240) to indicate the baseline statistical distribution (245) that was discovered.

2. The method of claim 1, wherein k is an integer equal to a number of times the candidate statistical distributions (215) were previously updated and evaluated.

3. The method of claim 1 or 2, wherein the second operations data was used to set a prior distribution for each of the plurality of candidate statistical distributions.

4. The method of claim 1, 2 or 3, wherein the second operations data was received before receiving the first operations data.

5. The method of any of the preceding claims, wherein one of the plurality of candidate statistical distributions (215) are selected from a group of distributions consisting of:
   chi, chi-squared, Erlang, exponential, gamma, generalized-gamma, half-normal, inverse-gamma, inverse-Gaussian, lognormal, Nakagami, normal, Rayleigh, and reciprocal-Inverse-Gaussian distribution.

6. The method of any of the preceding claims, wherein the comparing is performed in real-time as datum is received.

7. The method of any of the preceding claims, wherein the selecting from the plurality of candidate distributions is recursively performed according to selecting *candidate j* associated with a largest $P(D_{k+1}|M_j)$ where $P(.|M_j)$ is the evidence of model $M_j$, $D_k$ is the second operations data and $\overline{D}_{k+1}$ is the first operations data, $\theta_k$ and $\theta_{k+1}$ are the parameters of model $M_j$ and $\lambda$ is a constant geometric forgetting factor:

$$P(D_{k+1}|M_j) := P(D_k|M_j)^\lambda \int_{\theta_{k+1}\in\Theta} P(\bar{D}_{k+1}|\theta_{k+1}, M_j)P(\theta_{k+1})d\theta_{k+1}$$

where

$D_{k+1} := D_k \cup \bar{D}_{k+1}$
$P(\theta_{k+1}) := P(\theta_k|\bar{D}_{k+1})$

8. The method of any of the preceding claims, further comprising:
updating the plurality of candidate statistical distributions (215) is based upon estimates formed using conjugate priors.

9. The method of any of the preceding claims, wherein the first operations data and the second operations data are safety or performance related.

10. The method of any of the preceding claims, wherein the first operations data and the second operations data characterize utilization of the machines, reliability of the machines, hours of operation of the machines, fuel or power usage of the machines, or maintenance records of the machines.

11. The method of any of the preceding claims, wherein the first operations data and the second operations data indicate a deterioration in a performance of the machines.

12. A computing device (120) for monitoring a collection of machines, the computing device (120) comprising:
processing circuitry (710) and memory (730), the memory (730) containing instructions executable by the processing circuity (710) whereby the computing device (120) is configured to:

receive a plurality of candidate statistical distributions (215) for the collection of machines, each of the plurality of candidate statistical distributions (215) describes a first operations data and a second operations data characterizing one or more aspects of at least one machine of the collection of machines;
update, recursively for a $k$ number of times, the plurality of candidate statistical distributions (215) based on a combination of the first operations data and the second operations data;
compare, recursively for the $k$ number of times, the plurality of candidate statistical distributions (215) based on a combination of the first and second operations data;
select from the plurality of candidate statistical distributions (215) a baseline statistical distribution (245) based on the comparing, wherein the baseline statistical distribution (245) is predicted to best describe both the first operations data and the second operations data; and
output an alert (240) indicating the baseline statistical distribution (245).

13. The computing device (120) of claim 12, wherein $k$ is an integer equal to a number of times the candidate statistical distributions 215 were previously updated and evaluated.

14. The computing device (120) of claim 12 or 13, is further configured to:
select from the plurality of candidate statistical distributions 215 is recursively performed according to selecting candidate $j$ associated with a largest $P(D_{k+1}|M_j)$ where $P(.|M_j)$ is evidence of a model $M_j$, $D_k$ is a second operations data and $\bar{D}_{k+1}$ is the first operations data, $\theta_k$ and $\theta_{k+1}$ are parameters of model $M_j$, and $\lambda$ is a constant geometric forgetting factor:

$$P(D_{k+1}|M_j) := P(D_k|M_j)^\lambda \int_{\theta_{k+1}\in\Theta} P(\bar{D}_{k+1}|\theta_{k+1}, M_j)P(\theta_{k+1})d\theta_{k+1}$$

where

$D_{k+1} := D_k \cup D_{k+1}$
$P(\theta_{k+1}) := P(\theta_k|\bar{D}_{k+1})$

**15.** A non-transitory computer-readable medium storing a computer program product for controlling a computing device (120), the computer program product comprising software instructions that, when run on the computing device (120), cause the computing device (120) to:

receive a plurality of candidate statistical distributions (215) for a collection of machines, each of the plurality of candidate statistical distributions (215) describes a first operations data and a second operations data characterizing one or more aspects of at least one machine of the collection of machines;

update, recursively for a $k$ number of times, the plurality of candidate statistical distributions (215) based on a combination of the first operations data and the second operations data;

compare, recursively for the $k$ number of times, the plurality of candidate statistical distributions (215) based on a combination of the first and second operations data;

select from the plurality of candidate statistical distributions (215) a baseline statistical distribution (245) based on the comparing;

trigger an alert (240) to indicate the baseline statistical distribution (245); and

wherein the baseline statistical distribution (245) is predicted to best describe both the first operations data and the second operations data.

**FIG. 1**

**205**

**HYPOTHESIS TESTING UNIT**
**210**

→ **ALERT**
**240**

**OPERATIONS**
**DATA**
**115**

215

**CANDIDATE**
**DISTRIBUTION**
**REFINEMENT UNIT**
**220**

215

245

**CANDIDATE DISTRIBUTION**
**SELECTION UNIT**
**230**

**FIG. 2**

300

RECEIVE OPERATIONS DATA OBSERVED FROM A FLEET OF
VEHICLES
310

PERFORM HYPOTHESIS TESTING BASED ON THE RECEIVED
OPERATIONS DATA IN COMPARISON TO A BASELINE
DISTRIBUTION AND A CANDIDATE DISTRIBUTION
320

OUTPUT ALERT RESPONSIVE TO DETERMINING THAT A
CURRENT BASELINE DISTRIBUTION IS NOT VALID
330

PERFORM CANDIDATE DISTRIBUTION REFINEMENT ON THE
RECEIVED OPERATIONS DATA
340

ASSIGN NEW BASELINE DISTRIBUTION BASED ON THE
PERFORMED CANDIDATE DISTRIBUTION SELECTION
350

FIG. 3

400

RECEIVING OPERATIONS DATA OBSERVED FROM A COLLECTION OF MACHINES WHEREIN THE OPERATION DATA IS EXPECTED TO BE REPRESENTED BY A BASELINE DISTRIBUTION CHARACTERIZING ONE OR MORE ASPECTS OF OPERATION OF AT LEAST ONE MACHINE OF THE COLLECTION OF MACHINES
410

COMPARING THE OPERATIONS DATA WITH EACH OF A PLURALITY OF DISTRIBUTIONS COMPRISING THE BASELINE DISTRIBUTION AND CANDIDATE DISTRIBUTIONS WITHIN A SET OF CANDIDATE DISTRIBUTIONS
420

DISCOVERING A NEW TREND IN THE OPERATION DATA IF IT IS DETERMINED THAT ONE OF THE CANDIDATE DISTRIBUTIONS MORE ACCURATELY REPRESENTS THE OPERATIONS DATA THAN THE BASELINE DISTRIBUTION OR THE BASELINE DISTRIBUTION IS IMPROBABLE
430

RESPONSIVE TO THE DETERMINING, ASSIGNING THE ONE CANDIDATE DISTRIBUTION AS THE BASELINE DISTRIBUTION, WHEREIN THE OPERATIONS DATA REPRESENTS THE CANDIDATE DISTRIBUTION
440

TRIGGERING AN ALERT TO INDICATE THE DISCOVERED NEW TREND IN THE OPERATION DATA
450

FIG. 4

500

RECEIVE FLEET VEHICLE DATA
510

DETERMINE DISTRIBUTION CANDIDATES THAT BEST
DESCRIBE THE FLEET VEHICLE DATA
520

FIG. 5

600

RECEIVING A PLURALITY OF CANDIDATE STATISTICAL DISTRIBUTIONS FOR THE COLLECTION OF MACHINES
610

UPDATING THE PLURALITY OF CANDIDATE STATISTICAL DISTRIBUTIONS BASED ON A COMBINATION OF THE FIRST OPERATIONS DATA AND THE SECOND OPERATIONS DATA
620

COMPARING THE PLURALITY OF CANDIDATE STATISTICAL DISTRIBUTIONS BASED ON A COMBINATION OF THE FIRST AND SECOND OPERATIONS DATA
630

SELECTING FROM THE PLURALITY OF CANDIDATE STATISTICAL DISTRIBUTIONS A BASELINE STATISTICAL DISTRIBUTION BASED ON THE COMPARING
640

OUTPUTTING THE BASELINE STATISTICAL DISTRIBUTION, WHEREIN THE BASELINE STATISTICAL DISTRIBUTION IS PREDICTED TO BEST DESCRIBE BOTH THE FIRST OPERATIONS DATA AND THE SECOND OPERATIONS DATA
650

SENDING AN ALERT TO INDICATE THE DISCOVERED BASELINE STATISTICAL DISTRIBUTION
660

FIG. 6

COMPUTING DEVICE **120**

PROCESSING CIRCUITRY
**710**

BUS **720**

MEMORY CIRCUITRY
**730**

SOFTWARE PROGRAM
**740**

**205**

INTERFACE CIRCUITRY **735**

TRANSMITTER **745**

RECEIVER **755**

**FIG. 7**

**EUROPEAN SEARCH REPORT**

Application Number

EP 25 15 7470

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 230 638 B1 (SIKORSKY AIRCRAFT CORP [US]) 24 July 2019 (2019-07-24) * the whole document * | 1-15 | INV.<br>B64F5/60<br>G01M5/00<br>G05B23/02 |
| A | US 2017/323231 A1 (JOHNSON CHRISTOPHER DONALD [US] ET AL) 9 November 2017 (2017-11-09) * paragraph [0120] - paragraph [0173] * | 1-15 | G06F17/18<br>G06Q10/04<br>G06Q10/20 |

TECHNICAL FIELDS
SEARCHED      (IPC)

B64F
G05B
G06F
G06Q
G01M

The present search report has been drawn up for all claims

| Place of search | Date of completion of the search | Examiner |
|---|---|---|
| Munich | 3 July 2025 | Veshi, Erzim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EP 4 603 395 A1

## ANNEX TO THE EUROPEAN SEARCH REPORT
## ON EUROPEAN PATENT APPLICATION NO.

EP 25 15 7470

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2025

| Patent document cited in search report | | Publication date | Patent family member(s) | | Publication date |
|---|---|---|---|---|---|
| EP 2230638 | B1 | 24-07-2019 | EP | 2230638 A2 | 22-09-2010 |
| | | | US | 2010235108 A1 | 16-09-2010 |
| | | | US | 2010235109 A1 | 16-09-2010 |
| US 2017323231 | A1 | 09-11-2017 | US | 2017323231 A1 | 09-11-2017 |
| | | | US | 2017323239 A1 | 09-11-2017 |
| | | | US | 2017323240 A1 | 09-11-2017 |
| | | | US | 2017323403 A1 | 09-11-2017 |

EPO FORM P0459

For more details about this annex : see Official Journal of the European Patent Office, No. 12/82